# EUROPÄISCHE PATENTSCHRIFT

(11) **EP 3 898 850 B1**
(45) Veröffentlichungstag und Bekanntmachung des Hinweises auf die Patenterteilung: **04.12.2024**
(21) Anmeldenummer: 19824284.4
(22) Anmeldetag: 13.12.2019
(51) Int. Cl.: C09D 5/00, C09D 101/02, C09D 183/12, C08G 77/46, C09D 7/47, C09D 7/65, C09D 11/102

(54) **UNIVERSELLE GLEIT- UND VERLAUFADDITIVE MIT ÜBERLACKIERBARER EIGENSCHAFT**
UNIVERSAL SLIP AND FLOW CONTROL ADDITIVES WITH RECOATABLE QUALITY
ADDITIFS UNIVERSELS DE GLISSEMENT ET DE NIVELLEMENT POUVANT RECEVOIR UN VERNIS

(30) Priorität: 20.12.2018 EP 18214444
(43) Veröffentlichungstag der Anmeldung: 27.10.2021
(73) Patentinhaber: Evonik Operations GmbH, 45128 Essen (DE)
(72) Erfinder: HINRICHS, Petra, 44866 Bochum (DE); DE GANS, Berend-Jan, 45478 Mülheim an der Ruhr (DE); REINARTZ, Roger, 5685 JG Best (NL)
(74) Vertreter: Evonik Patent Association
(86) Internationale Anmeldenummer: PCT/EP2019/085054
(87) Internationale Veröffentlichungsnummer: WO 2020/126894

(56) Entgegenhaltungen:
- EP-A2- 0 265 807
- EP-A2- 1 035 153
- EP-B1- 0 265 807
- CN-A- 102 911 547
- CN-A- 108 047 452
- CN-A- 109 851 843
- US-A- 3 984 347
- US-A1- 2009 253 817

## Beschreibung

Die vorliegende Erfindung betrifft universelle Gleit- und Verlaufadditive auf Basis von Polyoxyalkylen-Polysiloxan-Copolymerisaten.

Die Anforderungen an Lacke und Farben sind vielfältig. Grundsätzlich haben Lack- bzw. Farbbeschichtungen zwei Aufgaben bzw. Funktionen, die schützende und die dekorative Funktion. Sollten im Weiteren nur der Begriff "Lackbeschichtung" aufgeführt sein, so sind beide Arten der Beschichtung gemeint. Sie verschönern, schützen und bewahren Materialien wie Holz, Metall oder Kunststoff. Demnach werden auf der einen Seite brillante und glatte Lackschichten gefordert, auf der anderen Seite eine geschlossene Lackschicht zur Sicherstellung der chemischen und mechanischen Beständigkeit, eine gewisse Gleitfähigkeit der Lacke oder eine besondere Haptik.

Lackierte Produkte, wie z. B. ein Möbelstück, ein Kühlschrank oder ein Auto, lassen sich mit einem guten Verlauf viel besser verkaufen. Aus diesem Grund werden Gleit- und Verlaufadditive für die Optimierung des Verlaufsverhaltens einer Lackbeschichtung entwickelt und in Lack- und Farbformulierungen eingesetzt.

Handelsübliche Gleit- und Verlaufadditive sind auf Basis von Polyacrylaten, Celluloseacetobutyraten, Fluortensiden oder Silikonen bekannt.

Silikone werden in der Lackindustrie seit Anfang der fünfziger Jahre eingesetzt. Insbesondere durch die chemische Modifizierung der Dimethylpolysiloxan-Kette konnten die wichtigsten Silikon-Eigenschaften, wie etwa Verträglichkeit, Gleitwiderstand oder Kratzfestigkeit gesteuert werden.

Bekannte modifizierte Dimethylpolysiloxan-Ketten sind Polyoxyalkylen-Polysiloxan-Blockmischpolymerisate, wobei das ausgewogene Verhältnis der Polyoxyalkylenblöcke und der Polysiloxanblöcke der Blockmischpolymerisate und auch der Aufbau der beiden Blöcke von großer Bedeutung sind. Für den Aufbau eines möglichst wirksamen Gleit- und Verlaufadditivs für den Einsatz in Holz-, Kunststoff-, Industrie-, Automobillacke oder Druckfarben gibt es eine Vielzahl von Variablen sowohl für den Polyoxyalkylenblock als auch für den Polysiloxanblock:
Der Polyoxyalkylenblock kann aus verschiedenen Oxyalkyleneinheiten, vornehmlich aus Oxyethylen-, Oxypropylen- und Oxybutyleneinheiten, zusammengesetzt sein. Dabei können das Gewichtsverhältnis dieser Einheiten zueinander, ihre Sequenz sowie das Molgewicht des Polyoxyalkylenblockes variiert werden. Von Bedeutung ist auch die Endgruppe des Polyoxyalkylenblockes, die reaktiv (z. B. OH-Gruppe) oder inert (z. B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschiedliche Polyoxyalkylenblöcke an den Polysiloxanblock gebunden sein. Der Polysiloxanblock kann in Bezug auf Art und Anteil der Si-Einheiten variiert werden. Der Siloxanblock kann linear oder verzweigt sein und unterschiedliche Molekulargewichte aufweisen. Die Polyoxyalkylenblöcke können end- und/oder seitenständig an den Polysiloxanblock gebunden sein. Vorhersagen über Wirksamkeit eines Polysiloxan-Polyoxyalkylen-Blockmischpolymerisates als Gleit- und Verlaufadditive können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung im Sinne der Herstellung von Gleit- und Verlaufadditiven besonders wirksamer spezieller Strukturparameter und entsprechender Blockmischpolymerisate eine fortschrittsraffende und somit erfinderische Leistung dar.

Polysiloxan-Polyoxyalkylen-Blockmischpolymerisate, welche in der Lacktechnologie Verwendung finden, sind bereits wiederholt beschrieben worden. Aus der großen Anzahl entsprechender Veröffentlichungen sollen stellvertretend die folgenden Schriften genannt werden.

So beschreibt die EP 0 265 807 A2 die Verwendung von Polyoxyalkylen-Polysiloxan-Blockmischpolymerlsaten als Mittel zur Verbesserung der Kratzfestigkeit und Erhöhung der Gleitfähigkeit von Lackoberflächen, wobei die Kettenlänge der Blockmischpolymerisate bei 40 bis 60 liegt und das Molekulargewichtsmittel der Polyoxyalkylenblöcke zwischen 1400 bis 3000 g/Mol beträgt.

Auch die EP 0 785 240 B1 offenbart wässrige und strahlenhärtende Drucklacke und Druckfarben, die spezielle Polyoxyalkylen-Polysiloxan-Copolymerisate enthalten, die eine verbesserte Kratzfestigkeit, eine erhöhte Gleitfähigkeit sowie eine äußerst geringe Schaumneigung aufweisen, so dass die Druckfarbenherstellung problemloser verläuft und gleichzeitig ein optisch ansprechendes Druckbild erhalten werden kann. Hier liegt die Kettenlänge der Copolymerisate ebenfalls bei 40 bis 60, wobei das Molekulargewichtsmittel der Polyoxyalkylenblöcke 300 bis 800 g/Mol beträgt.

Beide im Stand der Technik genannte Polyoxyalkylen-Polysiloxan-Copolymerisate haben jedoch den Nachteil, dass sie in Lacken und Farben nicht überlackierbar oder überdruckbar sind bzw. schlechte Werte aufweisen.

Die Überlackierbarkeit bzw. Überdruckbarkeit von Lacken bzw. Farben ist bei der Ausbesserung und Reparatur von Lack- und Farboberflächen von besonderer Bedeutung. Das Auftreten von Oberflächenbeschädigungen des Lackes bei Gegenständen ist in allen Bereichen bekannt, eine Ausbesserung diese beschädigten Stellen stellt immer eine Herausforderung dar. Auch das Überdrucken von diversen Druckerzeugnissen, wie Folien und Papier, stellen einen großen Bedarf dar. Hierbei soll die überlackierbare Schicht mit der neu aufgebrachten Schicht eine Einheit bilden und sich nicht wieder voneinander lösen.

Es ist daher Aufgabe der Erfindung, Gleit- und Verlaufadditive bereitzustellen, die eine verbesserte Kratzfestigkeit, eine erhöhte Gleitfähigkeit analog denen aus dem Stand der Technik, jedoch universell anwendbar und dabei gleichzeitig eine Überlackierbarkeit bzw. Überdruckbarkeit aufweisen, ohne das optische Lackbild/Farbbild durch Benetzungsfehler oder ähnliches zu beeinträchtigen.

Darüber hinaus kann eine bewusste, gezielte Eingrenzung der beschriebenen Breite zu anwendungstechnisch optimierten Produkten führen, die bisher in der Fülle der bekannten Bandbreiten nicht aufgefunden wurden.

Zur Lösung der Aufgabe werden daher universelle Gleit- und Verlaufadditive mit überlackierbarer bzw. überdruckbarer Eigenschaft enthaltend Polyoxyalkylen-Polysiloxan-Copolymerisate der allgemeinen Formel (I) 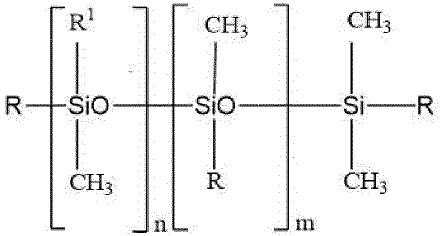
R¹ = gleiche und/oder verschiedene Alkylreste mit 1 bis 8 C-Atomen, bevorzugt mit 1 - 4 C-Atomen, besonders bevorzugt mit 1 oder 2 C-Atomen,
R = R¹ und/oder -CₚH₂ₚO[(C₂H₄O)ₓ(C₃H₆O)_{y}]R², wobei p = 2, 3 oder 4 ist, mit der Maßgabe dass mindestens ein R = -CₚH₂ₚO[(C₂H₄O)ₓ(C₃H₆O)_{y}]- ist,
R² = Alkylrest mit 1 bis 3 C-Atomen,
n ≥ 45, bevorzugt n ≥ 50, besonders bevorzugt n > 60,
m = 1 bis 5,
wobei x und y so gewählt sind, dass das Molekulargewichtsmittel des Polyoxyalkylenblocks - [(C₂H₄O)ₓ(C₃H₆O)_{y}]- > 3.000 g/mol beträgt und das Molgewichtsverhältnis x zu y < 0,8, bevorzugt < 0,75 ist, vorgeschlagen.

Vorzugsweise mit der Maßgabe, dass n nicht größer als 500, bevorzugt nicht größer als 300 und besonders bevorzugt nicht größer als 200 ist.

Vorzugsweise mit der Maßgabe, dass das Molekulargewichtsmittel des Polyoxyalkylenblocks - [(C₂H₄O)ₓ(C₃H₆O)_{y}]- kleiner als 10.000 g/mol, bevorzugt kleiner als 8.000 g/mol und besonders bevorzugt kleiner als 5.000 g/mol ist.

Vorzugsweise mit der Maßgabe, dass das Molgewichtsverhältnis x zu y nicht kleiner als 0,05, bevorzugt nicht kleiner als 0,1 und besonders bevorzugt nicht kleiner als 0,2 ist.

Für den Fachmann ist offensichtlich, dass die erhaltenen Copolymerisate in Form eines Gemisches vorliegen, dessen Verteilung im Wesentlichen durch statistische Gesetze bestimmt wird. Die Werte für x, y, p sowie n, m entsprechen daher Mittelwerten.

Von wesentlicher Bedeutung für die Eigenschaften der Polyoxyalkylen-Polysiloxan-Copolymerisate sind die Zahlenwerte der Indizes n und m. n gibt die Anzahl der Methylalkylsiloxyeinheiten an und bestimmt die Kettenlänge der Copolymerisate. n hat bei den erfindungsgemäß zu verwendenden Polyoxyalkylen-Polysiloxan-Copolymerisaten einen Zahlenwert von n ≥ 45, bevorzugt n ≥ 50, besonders bevorzugt n > 60. Vorzugsweise mit der Maßgabe, dass n nicht größer als 500, bevorzugt nicht größer als 300 und besonders bevorzugt nicht größer als 200 ist. Es ist dem Fachmann geläufig, dass die Verbindungen in Form eines Gemisches mit einer im Wesentlichen durch statistische Gesetze geregelten Verteilung vorliegen. Der Wert von n stellt deshalb den Mittelwert der Anzahl der Methylalkylsiloxy-Einheiten dar.

Die erfindungsgemäß verwendeten Polysiloxane werden im Allgemeinen hergestellt durch eine platinkatalysierte Additionsreaktion eines Siloxans enthaltend ein Silanwasserstoffatom mit einem linearen Polyoxyalkylenoxidpolyether, dessen lineare Kette an einem Ende blockiert ist mit einer Alkylenoxygruppe (wie Allyloxy- oder Vinyloxy-) und an einem anderen Ende beispielsweise mit einer Alkoxy-, Aralkyloxy- oder Acyloxygruppe verschlossen ist wie nach folgender Gleichung:

XSiH + H₂C=CHCH₂OR³ → XSiCH₂CH₂CH₂OR³

Die erfindungsgemäßen Polysiloxane sind grundsätzlich bekannt. Weitere Herstellungsverfahren sind aus der EP 0 785 240 B1 offenbart.

Erfindungsgemäß bestehen die Polyoxyalkylenblöcke aus Oxyethylen- und Oxypropyleneinheiten, vorzugsweise ausgehend von Ethylenoxiden und Propylenoxiden, wobei das Molekulargewichtsmittel der Polyoxyalkylenblöcke >3.000 g/Mol beträgt. Das Molgewichtsverhältnis der Oxyethylen- zu den Oxypropyleneinheiten, ausgedrückt durch das Verhältnis x: y, beträgt < 0,8, bevorzugt < 0,75.

Überraschenderweise wurde nun gefunden, dass
(i) Polysiloxane mit einer Kettenlänge von n ≥ 45, bevorzugt n ≥ 50, besonders bevorzugt n > 60,
(ii) gezielt gewähltes Molekulargewichtsmittel des Polyoxyalkylenblocks [(C₂H₄O)ₓ(C₃H₆O)_{y}] >3.000 g/mol,
(iii) gezielt gewähltes Molgewichtsverhältnis von Oxyethylen- zu den Oxypropyleneinheiten x zu y < 0,8, bevorzugt < 0,75 ist und
(iv) mit der Verwendung sogenannter endverschlossenen Polyalkylenoxid-Polyether in der Lage sind, Gleit- und Verlaufadditive mit den hervorragenden typischen Eigenschaften der Gleitfähigkeit und Kratzfestigkeit herzustellen und zudem überlackierbar sind.

Die in (iv) formulierte Randbedingung schließt nicht herstellungsbedingte Restmengen an unverschlossenen Polyethern (d.h. R² ist Wasserstoff) aus, die in bestimmten Fällen in einem Anteil von bis zu 10% in endverschlossenen Polyethern enthalten sein können.

Die erfindungsgemäßen Gleit- und Verlaufadditive erfüllen mehr als zwei wichtige anwendungstechnische Eigenschaften. Sie verbessern den Verlauf und die Gleitwirkung, gleichzeitig ermöglichen sie auch die Überlackierbarkeit bzw. Überdruckbarkeit der Lacke bzw. Farbe.

Vorzugsweise weisen die Polyoxyalkylen-Polysiloxan-Copolymerisate in den erfindungsgemäßen Gleit- und Verlaufadditiven den Rest R² = Methylreste auf.

Besonders bevorzugt weisen die erfindungsgemäßen Polyoxyalkylen-Polysiloxan-Copolymerisate ausschließlich seitenständige Modifizierungen mit R =-CₚH₂ₚO[(C₂H₄O)ₓ(C₃H₆O)_{y}]R², wobei p = 2, 3 oder 4 ist, auf.

Vorzugsweise weisen die erfindungsgemäßen seitenständig-modifizierten Polyoxyalkylen-Polysiloxan-Copolymerisate α- und ω-endständige Modifizierung von Alkylresten auf.

Ein weiterer Aspekt der Erfindung ist die Verwendung der Gleit- und Verlaufadditive in Beschichtungszusammensetzungen, wobei es sich bei den Beschichtungszusammensetzungen um lösemittelhaltige, lösungsmittelfreie oder wasserbasierte Lacke, oder Druckfarbe handelt.

Vorzugsweise kann die Verwendung von Polyoxyalkylen-Polysiloxan-Copolymerisaten in Mengen von 0,001 bis 5,0 Gew.-%, bevorzugt 0,01 - 3,0 Gew.-%, bezogen auf die Beschichtungszusammensetzungen, eingesetzt werden.

Ein weiterer Gegenstand der Erfindung ist die Verwendung von Polyoxyalkylen-Polysiloxan-Copolymerisaten der allgemeinen Formel (I) 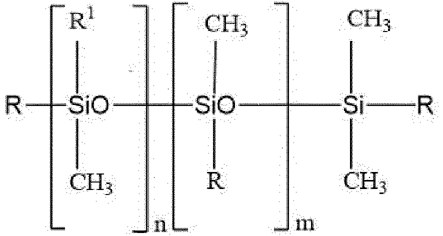
R¹ = gleiche und/oder verschiedene Alkylreste mit 1 bis 8 C-Atomen, bevorzugt mit 1 - 4 C-Atomen, besonders bevorzugt mit 1 oder 2 C-Atomen,
R = R¹ und/oder -CₚH₂ₚO[(C₂H₄O)ₓ(C₃H₆O)_{y}]R², wobei p = 2, 3 oder 4 ist, mit der Maßgabe dass mindestens ein R = -CₚH₂ₚO [(C₂H₄O)ₓ(C₃H₆O)_{y}]- ist,
R² = Alkylrest mit 1 bis 3 C-Atomen,
n ≥ 45, bevorzugt n ≥ 50, besonders bevorzugt n > 60,
m = 1 bis 5,
wobei x und y so gewählt sind, dass das Molgewicht des Polyoxyalkylenblocks -[(C₂H₄O)ₓ(C₃H₆O)_{y}]-> 3.000 g/mol beträgt und das Molgewichtsverhältnis x zu y < 0,8, bevorzugt < 0,75 ist,
als universelle Gleit- und Verlaufadditive mit überlackierbarer und überdruckbarer Eigenschaft.

Bevorzugt ist die Verwendung von Polyoxyalkylen-Polysiloxan-Copolymerisaten der allgemeinen Formel (I) vorzugsweise mit der Maßgabe, dass n nicht größer als 500, besonders bevorzugt nicht größer als 300 und besonders sehr bevorzugt nicht größer als 200 ist.

Bevorzugt ist die Verwendung von Polyoxyalkylen-Polysiloxan-Copolymerisaten der allgemeinen Formel (I) vorzugsweise mit der Maßgabe, dass das Molekulargewichtsmittel des Polyoxyalkylenblocks -[(C₂H₄O)ₓ(C₃H₆O)_{y}]- kleiner als 10.000 g/mol, bevorzugt kleiner als 8.000 g/mol und besonders bevorzugt kleiner als 5.000 g/mol ist.

Bevorzugt ist die Verwendung von Polyoxyalkylen-Polysiloxan-Copolymerisaten der allgemeinen Formel (I) vorzugsweise mit der Maßgabe, dass das Molgewichtsverhältnis x zu y nicht kleiner als 0,05, bevorzugt nicht kleiner als 0,1 und besonders bevorzugt nicht kleiner als 0,2 ist.

Hinsichtlich der gezielten Auswahlbedingungen der Polyoxyalkylen-Polysiloxan-Copolymerisate werden auf die o.g. Ausführung verwiesen.

Bevorzugt werden die erfindungsgemäßen Polyoxyalkylen-Polysiloxan-Copolymerisate mit ausschließlich seitenständigen Modifizierungen mit R =-CₚH₂ₚO[(C₂H₄O)ₓ(C₃H₆O)_{y}]R², wobei p = 2, 3 oder 4 ist, verwendet.

Besonders bevorzugt werden die erfindungsgemäßen seitenständig-modifizierten Polyoxyalkylen-Polysiloxan-Copolymerisate mit α- und ω-endständigen Modifizierungen von Alkylresten verwendet.

Vorzugsweise werden die Polyoxyalkylen-Polysiloxan-Copolymerisate zur Herstellung von Beschichtungszusammensetzungen verwendet.

Bevorzugt werden 0,001 bis 5,0 Gew.-%, bevorzugt 0,01 - 3,0 Gew.-% Polyoxyalkylen-Polysiloxan-Copolymerisate bezogen auf die Beschichtungszusammensetzung eingesetzt.

Die folgenden Beispiele dienen dem Fachmann allein zur Erläuterung dieser Erfindung und stellen keinerlei Beschränkung des beanspruchten Gegenstands oder des beanspruchten Verfahrens dar.

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

### Gleitwiderstandswert G (cN)

Zur Messung der Gleitfähigkeit hat sich eine Prüfmethode bewährt, bei der die Reibungskraft gemessen wird. Die Methode wird mittels eines Bluehillgeräts der Firma Instron durchgeführt.

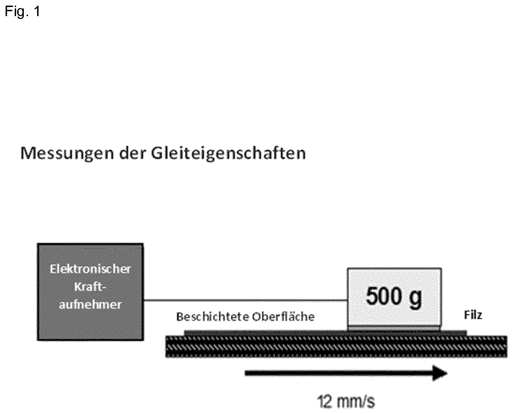

Fig. 1 zeigt eine schematische Darstellung der Prüfmethode.

Ein 500 g-Gewichtsstein mit definierter Filzunterlage wird von einer Zugmaschine gleichmäßig über die Lackoberfläche gezogen. Die dazu benötigte Kraft wird mit einem elektronischen Kraftaufnehmer gemessen. Die Prüfung wird bei konstanter Geschwindigkeit von 12 mm/sec durchgeführt und erlaubt eine reproduzierbare Messung mit hoher Genauigkeit. Je kleiner der Gleitwiderstandswert G (cN) ist, desto höher ist die Gleitfähigkeit der Beschichtungsoberfläche.

### Kratzfestigkeit

Unter Kratzfestigkeit versteht man die mechanische Widerstandsfähigkeit einer Beschichtungsoberfläche gegenüber sichtbaren Beschädigungen durch einen sich bewegenden, die Oberfläche berührenden harten Gegenstand. Der hier verwendete Gegenstand ist der Fingernagel. Mit der Fingernageloberseite wird im Winkel von 45° unter angemessenem Druck 5-mal über die Beschichtungsoberfläche gekratzt, wobei die Kratzrichtung vom Prüfer wegführt. Zur Beurteilung der Kratzwerte werden Standardprobe und zu prüfende Proben von demselben Prüfer durchgeführt. Anschließend erfolgt eine visuelle Beurteilung der Beschädigung der Beschichtungsoberfläche. Hierbei wird die Standardprobe mit der zu prüfende Probe untersucht und verglichen.

Die Beurteilung erfolgt nach folgender Skala:

| | | |
|---|---|---|
| 0 | = | entspricht der Standardprobe (ohne Additiv) |
| - | = | schlechter als Standardprobe |
| + | = | besser als Standardprobe |

### Applikation

Die jeweiligen Beschichtungszusammensetzungen werden mit einem 120µm Kastenrakel auf Holzplatten appliziert. Die so beschichteten Holzplatten werden 2 Stunden bei Raumtemperatur (RT), 2 Stunden bei 40°C und anschließend weiteren 24 Stunden bei RT getrocknet. Danach erfolgt eine zweite Beschichtung analog wie oben beschrieben auf die getrocknete erste Beschichtung vom Vortag. Die 2-mal beschichteten Holzplatten werden 2 Stunden bei Raumtemperatur, 2 Stunden bei 40°C und weiteren 7 Tage bei RT getrocknet (applizierte Holzplatte).

Die Haftung wird mittels Gitterschnitt/Klebebandabriss beurteilt. Ein guter Haftungswert liegt bei GT = 0. Ein schlechter Wert liegt bei GT = 5.

### Überlackierbarkeit

Die Überlackierbarkeit wird über die Haftungswerte mittels Gitterschnitt gemäß DIN EN ISO 2409 bestimmt. Hierbei wird die Haftung zweier aufeinander applizierten Beschichtungen ermittelt.

### Haptik bzw. Touch

Die Haptik ist die subjektive Wahrnehmung der Oberflächenbeschaffenheit einer Beschichtung. Hierbei wird mit den Fingerspitzen gleichmäßig über die beschichteten Holzplatten gestrichen. Da es sich um eine subjektive Prüfung handelt, wird die Prüfung immer von demselben Prüfer durchgeführt und miteinander verglichen. Hierbei wird eine Standardprobe als direkter Vergleich herangezogen.

Die Beurteilung erfolgt nach 3-stufiger Skala:

| | | |
|---|---|---|
| 0 | = | entspricht der Standardprobe (ohne Additiv) |
| - | = | schlechter als Standardprobe |
| + | = | besser als Standardprobe |

### Ausführungsbeispiele:

### 1. Gleit- und Verlaufadditive auf Basis von Polyoxyalkylen-Polysiloxan-Copolymerisaten

Tabelle 1 zeigt erfindungsgemäße Beispiele 1 - 3 und Vergleichsbeispiele (VG) 4 - 12.

Als Vergleichsbeispiele VG 4 - 6, wurden die Blockcopolymere gemäß EP 0 265 807 A2 bzw. EP 0 785 240 B1 und VG 9 - 11 gemäß CN 108047452 hergestellt und für die anwendungstechnische Prüfung eingesetzt.

Des Weiteren wurden kommerziell erhältliche Verlaufadditive als weitere Vergleichsbeispiele VG 7 (Tego^{®} Glide 410, Fa. Evonik) und VG 8 (Borchi^{®} Gol OL 17, Fa. Borchers) für die anwendungstechnische Prüfung eingesetzt. Diese enthalten laut Produktdatenblatt Polyethermodifizierte Polysiloxane.

### Herstellung der erfindungsgemäßen Gleit- und Verlaufadditive 1 - 3

In einem mit Rührer, Thermometer, Gaseinleitung und Rückflusskühler versehenen Kolben werden die Siloxane, Polyether vorgelegt (siehe Tabelle 1). Durch die Apparatur wird Stickstoff geleitet und unter Rühren wird der Kolbeninhalt auf 80 bis 100°C aufgeheizt. Bei dieser Temperatur wird der Ansatz mit einem Platinkatalysator versetzt (ca. 2 bis 4 ppm Pt). Es setzt eine exotherme Reaktion ein. Dabei treten, abhängig von den eingesetzten Edukten, Temperaturerhöhungen von 10 bis 30 °C auf. Man lässt die Ansätze abreagieren und erreicht SiH-Umsätze von ≥ 97 % (bestimmt über in alkalischem Medium mit n-Butanol abspaltbarem Wasserstoff). Während der Reaktion wird der zunächst trübe Kolbeninhalt klar. Die Reaktionszeiten betragen in der Regel 1 bis 8 Stunden.

Die Polyether werden vorzugsweise im Überschuss eingesetzt (30 bis 60%). Die oben beschriebene Reaktion kann auch unter Zusatz von Lösemitteln durchgeführt werden, was besonders dann vorteilhaft ist, wenn höherviskose Produkte entstehen. Dabei können Lösemittel eingesetzt werden, die nach der Reaktion abdestilliert werden können (z. B. Toluol, Xylol) oder solche, die nach der Reaktion im Endprodukt verbleiben können (z. B. Dipropylenglykol, Di- und Tripropylenglykolmonon-butylether, Propylenglykolmonophenylether, doppelbindungsfreie Polyether).

**Tabelle 1: Gleit- und Verlaufadditive**

| **Gleit- und Verlaufadditiv** | **Referenz** | | **Modifizierungsposition des -CₚH₂ₚO[C₂H₄O)ₓ(C₃H₆O)_{y}]R²** | **R** | **R¹** | **R²** | **p** | **n** | **m** | **x/y** | **Molgewicht Polyoxyalkylenblock** | **Aussehen** |
|---|---|---|---|---|---|---|---|---|---|---|---|---|
| 1 | | erfindungsgemäß | seitenständig | -CₚH₂ₚO[(C₂H₄O)ₓ(C₃HeO)_{y}]R², CH₃ | CH₃ | CH₃ | 3 | 72 | 3,9 | 0,73 | >3000 | klar |
| 2 | | erfindungsgemäß | endständig | -CₚH₂ₚO[(C₂H₄O)ₓ(C₃HeO)_{y}]R², CH₃ | CH₃ | CH₃ | 3 | 47 | 2 | 0,73 | >3000 | klar |
| 3 | | erfindungsgemäß | seitenständig und endständig | -CₚH₂ₚO[(C₂H₄O)ₓ(C₃H₆O)_{y}]R² | CH₃ | CH₃ | 3 | 58 | 1 | 0,73 | >3000 | klar |
| VG 4 | EP 0 265 807 A2 | nicht erfindungsgemäß | seitenständig und endständig | -CₚH₂ₚO[(C₂H₄O)ₓ(C₃H₆O)_{y}]R² | CH₃ | H | 3 | 60 | 0,3 | 1,35 | 1400 - 3000 | klar |
| VG 5 | EP 0 785 240 B1 | nicht erfindungsgemäß | endständig | -CₚH₂ₚO[(C₂H₄O)ₓ(C₃H₆O)_{y}]R², CH₃ | CH₃ | CH₃ | 3 | 48 | 1 | 2,85 | <800 | klar |
| VG 6 | EP 0 785 240 B1 | nicht erfindungsgemäß | endständig | -CₚH₂ₚO[(C₂H₄O)ₓ(C₃H₆O)_{y}]R², CH₃ | CH₃ | CH₃ | 3 | 39 | 1 | 2,85 | <800 | klar |
| VG 7 | Tego^{®} Glide 410 | nicht erfindungsgemäß | | - | - | - | - | - | - | - | - | klar |
| VG 8 | Borchi^{®} Gol OL 17 | nicht erfindungsgemäß | | - | - | - | - | - | - | - | - | klar |
| VG 9 | CN 108047452 | nicht erfindungsgemäß | seitenständig | -CₚH₂ₚO[(C₂H₄O)ₓ(C₃H₆O)_{y}]R², CH₃ | CH₃ | CH₃ | 3 | 72 | 3,9 | 2,03 | 3300 | trüb, bräunlich |
| VG 10 | CN 108047452 | nicht erfindungsgemäß | seitenständig | -CₚH₂ₚO[(C₂H₄O)ₓ(C₃H₆O)_{y}]R², CH₃ | CH₃ | CH₃ | 3 | 98 | 1 | 1,56 | 1100 | trüb, graubraun, dunkler Bodensatz |
| VG 11 | CN 108047452 | nicht erfindungsgemäß | seitenständig | -CₚH₂ₚO[(C₂H₄O)ₓ(C₃H₆O)_{y}]R², CH₃ | CH₃ | CH₃ | 3 | 98 | 1 | 0,67 | 600 | trüb, gräulich, dunkler Bodensatz |

### 2. Anwendungstechnische Überprüfung

### 2.1 Lösungsmittelhaltiger Holzlack 1

Zunächst wird ein Stammlack ohne Härter gemäß Tabelle 2 hergestellt. Hierbei werden die Bestandteile mittels Dispermat 10 Minuten bei 1000Upm gemischt.

Für die anwendungstechnische Prüfung werden 50 g Stammlack mit 0,35 g eines Additivs gemäß Tabelle 1 versetzt und mittels Dispermat 1 Minute bei 500Upm homogenisiert-(additivierter Stammlack).

Zu 25 g des additivierten Stammlackes werden 2,9 g Härter gewogen und erneut mittels Dispermat 1 Minute bei 500Upm homogenisiert. Der so hergestellte Holzlack 1 wird auf eine Holzplatte appliziert, welche zur anwendungstechnischen Überprüfung verwendet wird.

**Tabelle 2: lösungsmittelhaltige Holzlack - Rezeptur 1**

| Stammlack | Einwaage (g) |
|---|---|
| Polyester Polyol (75%ig) ¹⁾ | 65,5 |
| Xylol | 21,8 |
| Methoxypropylacetat | 12,7 |
| | 100,0 |

| Härter | |
|---|---|
| Aliphatisches Isocyanat (75%ig) ²⁾ | 11,5 |

| | |
|---|---|
| ¹⁾ Im Handel erhältlich unter der Bezeichnung Setal^{®} D RD 181 X, Fa. Allnex ²⁾ Im Handel erhältlich unter der Bezeichnung Desmodur^{®} 75 N MPA/X, Fa. Covestro | |

**Tabelle 3: Ergebnisse für lösungsmittelhaltigen Holzlack 1**

| **Lösungsmittelhaltiger Holzack 1 (LH)** | **Gleit-und Verlaufadditive** | **Überlackierbarkeit** | **Gleitwiderstandswerte [cN]** | **Haptik / Touch** | **Kratzfestigkeit** |
|---|---|---|---|---|---|
| Standardprobe (ohne Additiv) | 0 | GT 0 | 336 | 0 | 0 |
| LH 11 | 1 | GT 1 | 65 | + | 0 |
| LH 12 | 2 | GT 1 | 60 | + | 0 |
| LH 13 | 3 | GT 1 | 62 | + | 0 |
| LH VG 14 | VG 4 | GT 5 | 46 | + | 0 |
| LH VG 15 | VG 5 | GT 5 | 167 | 0 | 0 |
| LH VG 16 | VG 6 | GT 5 | 183 | 0 | 0 |
| LH VG 17 | Tego^{®} Glide 410 | GT 5 | 43 | + | 0 |
| LH VG 18 | Borchi^{®} Gol OL 17 | GT 1 | 66 | 0 | 0 |
| LH VG 19 | VG 9 | GT 5 | 66 | + | 0 |
| LH VG 110 | VG 10 | GT 5 | 61 | - | 0 |
| LH VG 111 | VG 11 | GT 5 | 49 | + | 0 |

Tabelle 3 zeigt auf, dass die erfindungsmäßen Gleit- und Verlaufadditive in diesem Lacksystem vergleichbare gute bis bessere Gleitfähigkeit und Kratzfestigkeit aufweisen. Zudem wurde festgestellt, dass die damit additivierten Lacke eine Überlackierbarkeit und eine gute Haptik aufweisen. Das kommerzielle Additiv der Fa. Borchers besitzt ebenfalls eine überlackierbare Eigenschaft, jedoch keine gute Haptik / Touch.

### 2.2 Lösungsmittelhaltiger Holzlack 2

Zunächst wird ein Stammlack ohne Härter gemäß Tabelle 4 hergestellt. Hierbei werden die Bestandteile mittels Dispermat 10 Minuten bei 1000Upm gemischt.

Für die anwendungstechnische Prüfung werden 50 g Stammlack mit 0,35 g eines Additivs gemäß Tabelle 1 versetzt und mittels Dispermat 1 Minute bei 500Upm homogenisiert (additivierter Stammlack).

Zu 25 g des additivierten Stammlackes werden 13,1 g Härter gewogen und erneut mittels Dispermat 1 Minute bei 500Upm homogenisiert. Der so hergestellte Holzlack 2 wird auf eine Holzplatte appliziert, welche zur anwendungstechnischen Überprüfung verwendet wird.

**Tabelle 4: lösungsmittelhaltige Holzlack - Rezeptur 2**

| Stammlack | Einwaage (g) |
|---|---|
| Polyester Polyol (75%ig) ³⁾ | 71,5 |
| Methoxypropylacetat | 5,3 |
| Butylacetat | 17,9 |
| Ethylacetat | 5,3 |
| | 100 |
| | |

| Härter | |
|---|---|
| Aromatisches Isocyanat (51 %ig) ⁴⁾ | 51,4 |
| Aromatisches Isocyanat (75%ig) ⁵⁾ | 34,2 |
| Butylacetat | 14,4 |
| | 100 |

| | |
|---|---|
| ³⁾ Im Handel erhältlich unter der Bezeichnung Desmophen^{®} 1300 BA , Fa. Covestro ⁴⁾ Im Handel erhältlich unter der Bezeichnung Desmodur^{®} IL 1351, Fa. Covestro ⁵⁾ Im Handel erhältlich unter der Bezeichnung Desmodur^{®} L 75, Fa. Covestro | |

**Tabelle 5: Ergebnisse für lösungsmittelhaltigen Holzlack 2**

| **Lösungsmittelhaltiger Hozlack 2 (LH)** | **Gleit- und Verlaufadditive** | **Überlackierbarkeit** | **Gleitwiderstandswerte [cN]** | **Haptik / Touch** | **Kratzfestigkeit** |
|---|---|---|---|---|---|
| Standardprobe (ohne Additiv) | 0 | GT 0 | 182 | 0 | 0 |
| LH 21 | 1 | GT 0 | 47 | + | + |
| LH 22 | 2 | GT 0 | 46 | + | + |
| LH 23 | 3 | GT 0 | 50 | + | + |
| LH VG 24 | VG 4 | GT 5 | 48 | + | + |
| LH VG 25 | VG 5 | GT 5 | 119 | 0 | - |
| LH VG 26 | VG 6 | GT 5 | 124 | 0 | - |
| LH VG 27 | Tego^{®} Glide 410 | GT 5 | 45 | + | + |
| LH VG 28 | Borchi^{®} Gol OL 17 | GT 5 | 48 | + | + |
| LH VG 29 | VG 9 | GT 3 | 61 | + | + |
| LH VG 210 | VG 10 | GT 5 | 43 | + | - |
| LH VG 211 | VG 11 | GT 5 | 58 | + | + |

Tabelle 5 zeigt auf, dass die erfindungsmäßen Gleit- und Verlaufadditive auch in diesem Holzlacksystem eine hervorragende Überlackierbarkeit aufweisen. Außerdem verbessern sie die Gleitfähigkeit, Kratzfestigkeit und Haptik/Touch. Alle Vergleichsbeispiele haben keine überlackierbare Eigenschaft.

## Patentansprüche

1. Universelle Gleit- und Verlaufadditive mit überlackierbarer bzw. überdruckbarer Eigenschaft enthaltend Polyoxyalkylen-Polysiloxan-Copolymerisate der allgemeinen Formel (I) 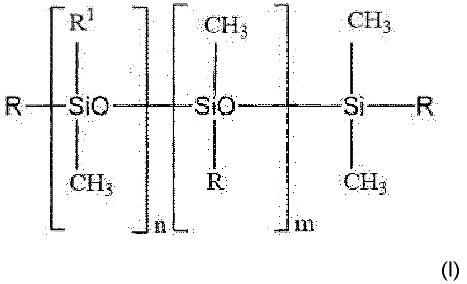
R¹ = gleiche und/oder verschiedene Alkylreste mit 1 bis 8 C-Atomen, bevorzugt mit 1 - 4 C-Atomen, besonders bevorzugt mit 1 oder 2 C-Atomen,
R = R¹ und/oder -CₚH₂ₚO[(C₂H₄O)ₓ(C₃H₆O)_{y}]R², wobei p = 2, 3 oder 4 ist, mit der Maßgabe dass mindestens ein R = --CₙH₂ₙO[(C₂H₄O)ₓ(C₃H₆O)_{y}]- ist,
R² = Alkylrest mit 1 bis 3 C-Atomen,
n ≥ 45, bevorzugt n ≥ 50, besonders bevorzugt n > 60,
m = 1 bis 5,
wobei x und y so gewählt sind, dass das Molekulargewichtsmittel des Polyoxyalkylenblocks -[C₂H₄O)ₓ(C₃H₆O)_{y}]- > 3.000 g/mol beträgt und das Molgewichtsverhältnis x zu y < 0,8, bevorzugt < 0,75 ist.

2. Gleit- und Verlaufadditive nach Anspruch 1, **dadurch gekennzeichnet, dass** der Rest R² Methylreste ist.

3. Verwendung der Gleit- und Verlaufadditive nach Anspruch 1 oder 2 in Beschichtungszusammensetzungen, wobei es sich bei den Beschichtungszusammensetzungen um lösemittelhaltige, lösungsmittelfreie oder wasserbasierte Lacke, oder Druckfarbe handelt.

4. Verwendung nach Anspruch 3, **dadurch gekennzeichnet, dass** die Polyoxyalkylen-Polysiloxan-Copolymerisaten in Mengen von 0,001 bis 5,0 Gew.-%, bevorzugt 0,01 - 3,0 Gew.-%, bezogen auf die Zusammensetzung, eingesetzt werden.

5. Verwendung von Polyoxyalkylen-Polysiloxan-Copolymerisaten der allgemeinen Formel (I) 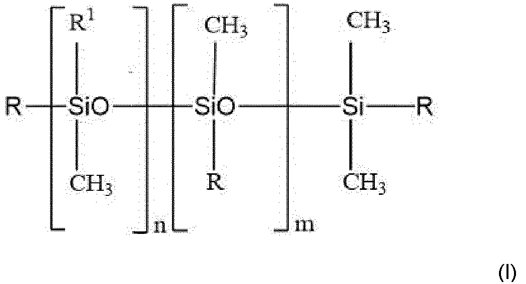
R¹ = gleiche und/oder verschiedene Alkylreste mit 1 bis 8 C-Atomen, bevorzugt mit 1 - 4 C-Atomen, besonders bevorzugt mit 1 oder 2 C-Atomen,
R = R¹ und/oder -CₚH₂ₚO[(C₂H₄O)ₓ(C₃H₆O)_{y}]R², wobei p = 2, 3 oder 4 ist, mit der Maßgabe dass mindestens ein R = -CₙH₂ₙO[(C₂H₄O)ₓ(C₃H₆O)_{y}]- ist,
R² = Alkylrest mit 1 bis 3 C-Atomen,
n ≥ 45, bevorzugt n ≥ 50, besonders bevorzugt n > 60,
m = 1 bis 5,
wobei x und y so gewählt sind, dass das Molgewicht des Polyoxyalkylenblocks -[C₂H₄O)ₓ(C₃H₆O)_{y}]- > 3.000 g/mol beträgt und das Molgewichtsverhältnis x zu y < 0,8, bevorzugt < 0,75 ist,
als universelle Gleit- und Verlaufadditive mit überlackierbarer bzw. überdruckbarer Eigenschaft.

6. Verwendung der Polyoxyalkylen-Polysiloxan-Copolymerisate nach Anspruch 5 zur Herstellung von Beschichtungszusammensetzungen.

7. Verwendung nach Anspruch 5 oder 6, **dadurch gekennzeichnet, dass** die Polyoxyalkylen-Polysiloxan-Copolymerisate in Mengen von 0,001 bis 5,0 Gew.-%, bevorzugt 0,01 - 3,0 Gew.-%, bezogen auf die Beschichtungszusammensetzung eingesetzt werden.

## Claims

1. Universal slip and levelling additives having recoatable or reprintable property, comprising polyoxyalkylene-polysiloxane copolymers of general formula (I) 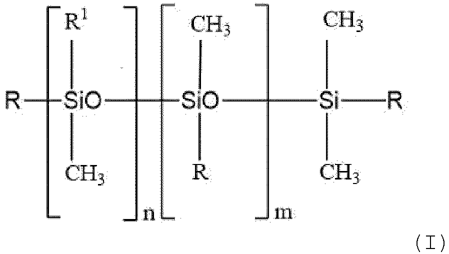
R¹ = identical and/or different alkyl radicals having 1 to 8 carbon atoms, preferably having 1 - 4 carbon atoms, particularly preferably having 1 or 2 carbon atoms,
R = R¹ and/or -CₚH₂ₚO[(C₂H₄O)ₓ(C₃H₆O)_{y}]R², where p = 2, 3 or 4, with the proviso that at least one R =-CₚH₂ₚO[(C₂H₄O)ₓ(C₃H₆O)_{y}]-,
R² = alkyl radical having 1 to 3 carbon atoms,
n ≥ 45, preferably n ≥ 50, particularly preferably n > 60,
m = 1 to 5,
wherein x and y are selected such that the average molecular weight of the polyoxyalkylene block - [C₂H₄O)ₓ(C₃H₆O)_{y}]- is > 3000 g/mol and the molar weight ratio of x to y is < 0.8, preferably < 0.75.

2. Slip and levelling additives according to Claim 1, **characterized in that** the radical R² is methyl radicals.

3. Use of the slip and levelling additives according to Claim 1 or 2 in coating compositions, wherein the coating compositions are solvent-containing, solvent-free or water-based coating, or printing ink.

4. Use according to Claim 3, **characterized in that** the polyoxyalkylene-polysiloxane copolymers are used in amounts from 0.001 to 5.0% by weight, preferably 0.01 - 3.0% by weight, based on the composition.

5. Use of polyoxyalkylene-polysiloxane copolymers of general formula (I) 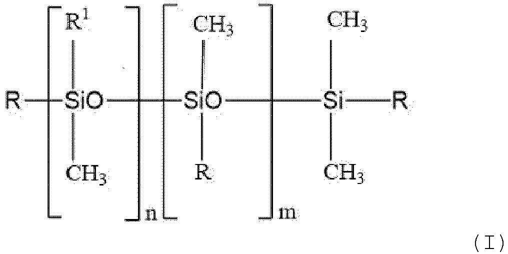
R¹ = identical and/or different alkyl radicals having 1 to 8 carbon atoms, preferably having 1 - 4 carbon atoms, particularly preferably having 1 or 2 carbon atoms,
R = R¹ and/or -CₚH₂ₚO[(C₂H₄O)ₓ(C₃H₆O)_{y}]R², where p = 2, 3 or 4, with the proviso that at least one R = - CₚH₂ₚO[(C₂H₄O)ₓ(C₃H₆O)_{y}]-,
R² = alkyl radical having 1 to 3 carbon atoms,
n ≥ 45, preferably n ≥ 50, particularly preferably n > 60,
m = 1 to 5,
wherein x and y are selected such that the molecular weight of the polyoxyalkylene block -[C₂H₄O)ₓ(C₃H₆O)_{y}]- is > 3000 g/mol and the molar weight ratio of x to y is < 0.8, preferably < 0.75, as universal slip and levelling additives having recoatable or reprintable property.

6. Use of the polyoxyalkylene-polysiloxane copolymers according to Claim 5 for producing coating compositions.

7. Use according to Claim 5 or 6, **characterized in that** the polyoxyalkylene-polysiloxane copolymers are used in amounts from 0.001 to 5.0% by weight, preferably 0.01 - 3.0% by weight, based on the coating composition.

## Revendications

1. Additifs universels de glissement et d'étalement présentant une propriété d'aptitude à recevoir une autre couche ou à la surimpression, contenant des copolymères polyoxyalkylène-polysiloxane de formule générale (I) 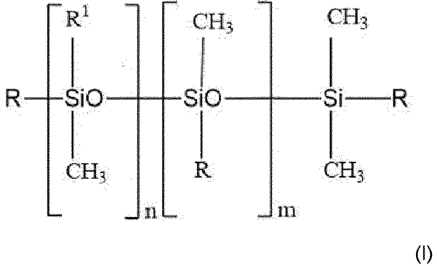
R¹ = des radicaux alkyle identiques et/ou différents ayant 1 à 8 atomes de carbone, de préférence 1 à 4 atomes de carbone, d'une manière particulièrement préférée ayant 1 ou 2 atomes de carbone,
R = R¹ et/ou -CₚH₂ₚO[(C₂H₄O)ₓ(C₃H₆O)_{y}]R², avec p = 2,
3 ou 4, à la condition qu'au moins un R = - CₚH₂ₚO[(C₂H₄O)ₓ(C₃H₆O)_{y}]-,
R² = un radical alkyle ayant 1 à 3 atomes de carbone,
n ≥ 45, de préférence n ≥ 50, d'une manière particulièrement préférée n > 60,
m = 1 à 5,
x et y étant choisis de façon que la masse moléculaire moyenne du bloc polyoxyalkylène -[(C₂H₄O)ₓ(C₃H₆O)_{y}]- soit > 3 000 g/mol et que le rapport des masses moléculaires x:y soit < 0,8, de préférence < 0,75.

2. Additifs de glissement et d'étalement selon la revendication 1, **caractérisés en ce que** le radical R² représente des radicaux méthyle.

3. Utilisation des additifs de glissement et d'étalement selon la revendication 1 ou 2 dans des compositions de revêtement, les compositions de revêtement étant des vernis contenant un solvant, sans solvant ou à base d'eau, ou une encre d'imprimerie.

4. Utilisation selon la revendication 3, **caractérisée en ce que** les copolymères polyoxyalkylène-polysiloxane sont utilisés en des quantités de 0,001 à 5,0 % en poids, de préférence de 0,01 - 3,0 % en poids par rapport à la composition.

5. Utilisation comme additifs universels de glissement et d'étalement ayant une aptitude à recevoir une autre couche ou à une surimpression, de copolymères polyoxyalkylène-polysiloxane de formule générale (I) 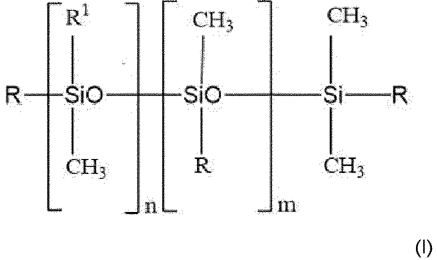
R¹ = des radicaux alkyle identiques et/ou différents ayant 1 à 8 atomes de carbone, de préférence 1 à 4 atomes de carbone, d'une manière particulièrement préférée ayant 1 ou 2 atomes de carbone,
R = R¹ et/ou -CₚH₂ₚO[(C₂H₄O)ₓ(C₃H₆O)_{y}]R², avec p = 2,
3 ou 4, à la condition qu'au moins un R = - CₚH₂ₚO[(C₂H₄O)ₓ(C₃H₆O)_{y}]-,
R² = un radical alkyle ayant 1 à 3 atomes de carbone,
n ≥ 45, de préférence n ≥ 50, d'une manière particulièrement préférée n > 60,
m = 1 à 5,
x et y étant choisis de façon que la masse moléculaire moyenne du bloc polyoxyalkylène -[(C₂H₄O)ₓ(C₃H₆O)_{y}]- soit > 3 000 g/mol et que le rapport des masses moléculaires x:y soit < 0,8, de préférence < 0,75.

6. Utilisation des copolymères polyoxyalkylène-polysiloxane selon la revendication 5 pour fabriquer des compositions de revêtement.

7. Utilisation selon la revendication 5 ou 6, **caractérisée en ce que** les copolymères polyoxyalkylène-polysiloxane sont utilisés en des quantités de 0,001 à 5,0 % en poids, de préférence de 0,01 - 3,0 % en poids par rapport à la composition de revêtement.
